# EUROPEAN PATENT APPLICATION

(11) **EP 4 765 529 A1**
(43) Date of publication of application: **24.06.2026**
(21) Application number: 24220600.1
(22) Date of filing: 17.12.2024
(51) Int. Cl.: H02G 3/08, H02G 3/12

(54) **INSTALLATION SYSTEM AND TOOL**

(71) Applicant: ABB Schweiz AG, 5400 Baden (CH)
(72) Inventor: Andersson, Johan, 06100 Porvoo (FI); Luomi, Juho, 06100 Porvoo (FI); Alajoki, Mikko, 06100 Porvoo (FI)
(74) Representative: Kolster Oy Ab

(57) **Abstract**

The invention relates to an installation system comprising a first installation tool (10) for installation of an electrical installation box (15), the first installation tool having a first end (7) and an opposite second end (8). To facilitate easy installation of the electrical installation box (15), the first installation tool comprises a front side (6) of the first end (7) which is provided with a first flange (1). A back side (12) of the first end (7) is provided with first (4) and the second protrusions (5) having a respective hook section (13). The second end (8) of the first installation tool is provided with a second (2) and with a third (3) having a largest distance between the outermost edges which corresponds to the largest distance between the outermost edges of the first flange (1).

## Description

### BACKGROUND OF THE INVENTION

### FIELD OF THE INVENTION

This invention relates to an installation system for installing an electrical installation box, and more particularly to an installation tool.

### DESCRIPTION OF PRIOR ART

Electrical installation boxes are commonly used in buildings to facilitate connection of electric wires of electrical wires to a mains supply, for instance.

A challenge with existing installation boxes is that an electrician preforming installation work needs to carry a significant number of parts in order to perform the needed installation work.

Typically, when an electrical installation box is used, a separate strain relief needs to be provided to the electrical installation box in order to ensure that any tension remaining in a cable pushed into the electrical installation box is not allowed to pull out the cable from the electrical installation box after the work has been completed.

Additionally, in case the electrical installation box is flush mounted into a hollow structure, a separate support may be needed to ensure that the box can be mounted to a correct depth within the structure. This is challenging, because the thickness of the structure may vary. Therefore, supports having different dimensions may be required in order to be able to mount the electrical installation box to the correct depth in the structure.

Finally, in some installations it is beneficial to mount several boxes close to each other, due to which a separate connector connecting the neighboring boxes to each other may be required.

Due to this and without prior knowledge of the details of the work that needs to be performed at the mounting site, the electrician does not in advance know which parts to bring to the installation site. Instead, the electrician needs to carry several different parts in order to be able to meet the requirements at all possible installation sites.

### SUMMARY OF THE INVENTION

An object of the present invention is to solve the above-mentioned drawback and to provide a solution which simplifies the installation work. This object is achieved with an installation system according to independent claim 1 and to an installation tool according to independent claim 12.

When installation of an electrical installation box is carried out by using an installation tool which comprises a first end with a first flange and a first and a second protrusion having respective hook sections with inner surfaces facing each other at a distance from each other corresponding to the largest distance between the outermost edges of the first flange, and which comprises a second end with a second and a third flange having the same size as the first flange, this installation tool can be attached to an other similar installation tool or alternatively to one or two electrical installation boxes simultaneously. Due to this the same installation tool can be utilized for several alternative installation tasks, and for installation in structures having varying dimensions. This simplifies the installation work and makes it possible for the electrician to carry a reduced number of parts.

Preferred embodiments are disclosed in the dependent claims.

### BRIEF DESCRIPTION OF DRAWINGS

In the following the invention will be described in closer detail by way of example and with reference to the attached drawings, in which
Figures 1 to 3 illustrate an installation tool,
Figure 4 illustrates an electrical installation box
Figure 5 and 6 illustrates installation of an electrical installation box with an installation tool,
Figure 7 illustrates installation of an electrical installation box with two installation tools,
Figure 8 illustrates strain relief provided with an installation tool, and
Figure 9 illustrates attachment of two electrical installation boxes to each other with an installation tool.

### DESCRIPTION OF AT LEAST ONE EMBODIMENT

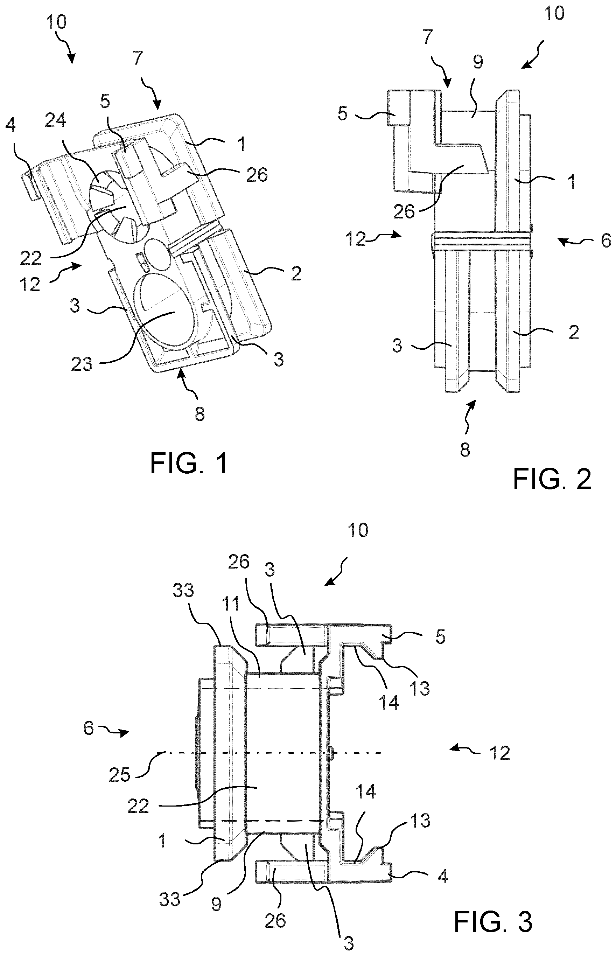

Figures 1 to 3 illustrate a first installation tool 10 seen from different directions. The illustrated installation tool comprises a front side 6 and an opposite back side 12 and additionally, a first side surface 9 and an opposite second side surface 11. However, the installation tool 10 may be utilized and installed in several alternative positions, due to which the front and back sides do not have to face any particular direction during use.

The front side 6 of the first installation tool 10 is in a first end 7 provided with a first flange 1 extending sideways outwards from a first 9 and a second 11 opposite side surface of the first end 7 for being received into a groove on an electrical installation box, as will be later explained. The first flange 1 may additionally extend outwards also from the first end 7 of the first installation tool 10, as illustrated in the drawings, however, this is not necessary in all implementations.

The back side 12 of the first end 7 is provided with a first 4 and a second 5 protrusion protruding from the first 9 and second side surfaces 11 in a direction away from the first flange 1. The first 4 and the second 5 protrusion have a respective hook section 13 with inner surfaces 14 facing each other and having a mutual largest distance between the inner surfaces 14 of the hook sections 13 which corresponds to the largest distance between the outermost edges 33 of the first flange 1, for receiving and engaging a flange having the same dimensions as the first flange 1.

The second end 8 of the first installation tool 10 is provided with a second 2 and with a third 3 flange extending sideways outwards from the first 9 and the second 11 opposite side surface of the second end 8 at a distance from each other. The second 2 and third 3 flange may additionally extend outwards also from the second end 8 of the first installation tool 10, as illustrated in the drawings, however, this is not necessary in all implementations.

The second 2 and third 3 flange both have a largest distance between the outermost edges which corresponds to the largest distance between the outermost edges 33 of the first flange 1. In this way any of the first, second or third flange may be received in the same and correctly dimensioned groove on the electrical installation box. The first installation tool 10 is preferably manufactured from a plastic material.

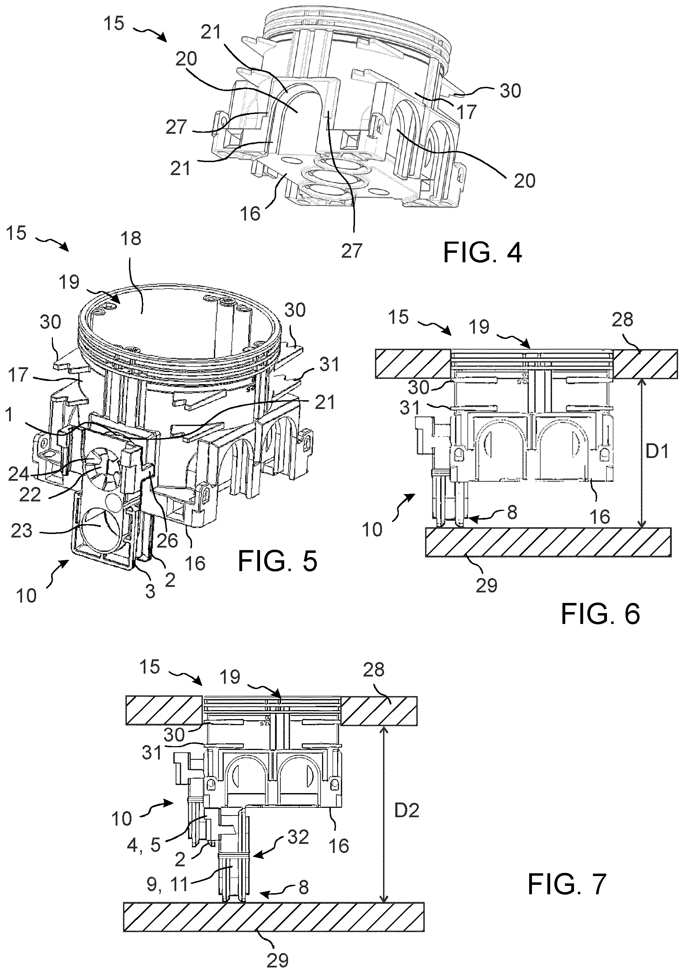

Figure 4 illustrates a first electrical installation box 15 which may be a part of the installation system including also the first installation tool illustrated in Figures 1 to 3. The first installation tool 10 may be utilized in the installation work of the first installation box 15 in a way explained in detail below.

The first electrical installation box 15 comprises a bottom 16 and at least one wall 17 which together delimit a connection space 18 from surroundings. In the illustrated figures it is by way of example assumed that the connection space has a cylindrical inner shape, due to which only one wall 17 may be sufficient. However, in other implementations a plurality of planar walls may be connected to each other to delimit the connection space, in which case the cross-section of the connection space 18 may be rectangular, for instance. An access opening 19 provides access to the connection space 18 to facilitate electrical installation work by attaching wires to each other, for instance.

The first electrical installation box 15 is provided with cable lead-through sections 20 at several locations of the wall 17. Additionally, the bottom 16 may be provided with cable lead-through sections. In the figures it has by way of example been assumed that the cable lead-through sections 20 are implemented as sections of the wall 17 or bottom which have a weakened structure as compared to other parts of the wall 17 or bottom 16. Consequently, during electrical installation it is easy to puncture one or more of the cable lead-through sections 20 to provide openings at the needed locations via which cables can be drawn into the first electrical installation box 15.

As illustrated in Figure 4, for instance, the first electrical installation box 15 is provided with a groove 21 on an outer side of the wall 17 to partly surround the cable lead-through sections 20 provided in the wall 17. In the position illustrated in Figure 4 where the bottom 16 is by way of example positioned lowermost in the figure, it can be seen that the groove 21 surrounds the cable lead through-sections 17 on all other sides except for the side closest to the bottom 16. In this way the first 1, the second 2 or the third 3 flange of the first installation tool 10 may be threaded from below upwards into the groove 21 in Figure 4, such that the selected first 1, second 2 or third 3 flange is received in the groove 21 and a firm attachment is obtained between the first electrical installation box 15 and the first installation tool 10.

Figure 5 and 6 illustrates installation of an electrical installation box 15 as illustrated in Figure 4 with a first installation tool 10 as illustrated in Figures 1 to 3.

In Figure 5 the first flange 1 of the first installation tool 10 is received into the groove 21, due to which the first installation tool 10 is attached to the first electrical installation box 15. In this position, the second 2 and the third flange 3 protrude further downwards past the bottom of the first electrical installation box 15 to provide a support.

As can be seen from Figure 5 (and Figures 1 and 3, for instance), the first end 7 of the first installation tool 10 is provided with a first trough-hole 22 extending between the opposite first 9 and second 11 side surfaces from the front side 6 of the first installation tool 10 to the back side 12 of the first installation tool 10. Similarly, the second end 8 of the first installation tool 10 is provided with a second trough-hole 23 extending between the opposite first 9 and second 11 side surfaces from the front side 6 of the first installation tool 10 to the back side 12 of the first installation tool 10. A cable can be threaded through the second through-hole 23 and then further through the first through-hole 22 into the connection space 18, which is accessible once the cable lead-through section 20 located at the first through-hole 22 has been punctured, for instance. After such threading the first installation tool 10 works as a strain relief which efficiently prevents a cable lead into the connection space via the first and second through-holes 22 and 23 from accidentally being pulled back out.

In order to additionally improve the strain relief properties of the first installation tool 10, at least one of the first 22 and second 23 through-holes may be provided with at least one flexible protrusion 24 extending inwards and towards a center axis 15 of the first through-hole 22. In the illustrated example, the first through-hole 22 is provided with such a flexible protrusion 24 of plastics, for instance. Preferably, the flexible protrusion 24 extends inwards and towards the center axis 25 of the first through-hole 22 from the back side 8 of the first end 9. In Figure 5 several such flexible protrusions 24 have been illustrated by way of example, which efficiently prevents accidental pulling out of a cable from the connection space 18 after it has been threaded therein via the first installation tool.

From Figure 5 it can also be seen that the first installation tool 10 has been attached by a snap attachment to the first electrical installation box 15. This has been achieved by providing the first installation tool 10 with a respective shaft 26 extending towards the first flange 1 from the first 4 and second protrusion 5, as illustrated in Figures 1 to 3. When the first flange 1 is introduced into the groove 21 from below as illustrated in Figures 4 and 5, the shafts 26 are elastically bent due to contact with the outer surface of the groove 21. However, once the bottom of the groove (uppermost in the example of Figure 5) has been reached, the shafts 26 straighten out and enter a first and a second recess 27 provided to the outer surface of a wall forming the groove 21.

In Figure 6 the electrical installation box 15 of Figure 5 has been installed into a hollow structure between a surface plate 28 and a bottom plate 29, for instance, by using the first installation tool 10 attached to the electric installation box 15 as illustrated in Figure 5. The surface plate 28 may be a plate forming an inner surface of a wall, a floor or a ceiling of a room space in a building for instance. A challenge with an installation of this type, is that the electrical installation box 15 needs to be firmly attached into the structure so that the upper edge of the access opening 19 is at the same level as the inner surface (facing the room) of the surface plate 28, so that installation in the connection space 18 is easy and that it also is easy to afterwards cover the access opening 19 with a lid or an electric apparatus, for instance.

As can be seen from Figure 6, the installation of the electrical installation box 15 has been implemented by supporting the second end 8 of the installation tool 10 which protrudes past the bottom part 16 against the bottom plate 29 of the structure. Simultaneously, protruding sections 30 extending outwards from the at least one wall 17 are in contact with an inner surface of the surface plate 28 of the structure. In this way the electrical mounting box 15 and the first installation tool 10 are firmly clamped between the surface plate 28 and the bottom plate 29 of the structure. Preferably, the first installation tool 10, the electrical installation box 15 and the location of the protruding sections 30 have been dimensioned and arranged in such a way, the the total distance from the lowermost part of the first installation tool 10 to the uppermost part of the protruding sections 30 (as illustrated in Figure 6) exactly correspond to the distance D1 between the inner surface of the surface place 28 and the inner surface of the bottom plate 29.

From Figure 6 it can also be seen that the electric installation box 15 includes a second set of protruding sections 31 extending outwards from the at least one wall 17 at a lower height (at a larger distance from the access opening 19) than the protruding sections 30 which contact the surface plate 28+ in Figure 6. The reason is that at another installation site the distance D1 between the surface plate 28 and the bottom plate 29 of the structure may be smaller so that the surface plate 28 should instead contact the lower second set of the protruding extensions 31. In that case the electrician carrying out the installation work may cut away the upper set of the protruding section 30 and get the installation height of the combined first installation tool 10 and the first electrical installation box 15 to match the smaller distance D1. To facilitate easy cutting, the protruding sections 30 and 31 are shaped as thin plates or wings in the illustrated examples. Possibly, if a smaller distance D1 is available in the structure, the thickness of the surface plate 28 may be double as compared to what has been illustrated in Figure 6 or two similar surface plates 28 as illustrated in Figure 6 may be installed on top of each other so that the upper edge of the access opening 19 is again at the same level as the inner surface facing the room of the uppermost or thicker surface plate 28.

Figure 7 illustrates installation of an electrical installation box in a similar way as has been illustrated in Figure 6. However, in Figure 7 a second installation tool 32 is additionally utilized. The second installation tool 32 has a shape and dimensions corresponding to the shape and the dimensions of the first installation tool 10. Consequently, to identical installation tools are utilized.

In Figure 7 the first installation tool 10 is attached to the first electrical installation box 15 in a similar way as has been explained in connection with Figure 6. The second installation tool 32 is configured to engage the second flange 2 of the first installation tool 10 with respective hook sections 13 of a first 4 and a second 5 protrusion protruding from first 9 and second side surfaces 11 of the second installation tool 32. In this way the second installation tool 32 protrudes away from the bottom 16 of the first electrical installation box 15 and forms a support which can contact the bottom plate 29 and support the first electrical installation box 15.

An advantage of using the second installation tool 32 is that it can be used as an extension for the first installation tool 10, so that the bottom 16 of the the first electrical installation box 15 can be firmly supported by the bottom plate 29 of the structure at an even bigger distance D2 from the surface plate 28 of the structure, as compared to the example in Figure 6.

Consequently, flush mounting into a hollow structure with the upper surface of the access opening 19 at the same level with the inner surface (facing the room space) of the surface plate 28 becomes possible, even though the structure has a larger distance between the surface plate 28 and the bottom plate 29. This is possible simply by utilizing two identical installation tools 10 and 32 and no other additional parts are needed for the installation work.

Naturally, the first installation tool 10, the second installation tool 32 or both can be utilized also for strain relief for a cable by threading the cable via the first 22 and second 23 through-holes of one or both of the installation tools 10 or 32, as has previously been explained in connection with Figure 6, for instance.

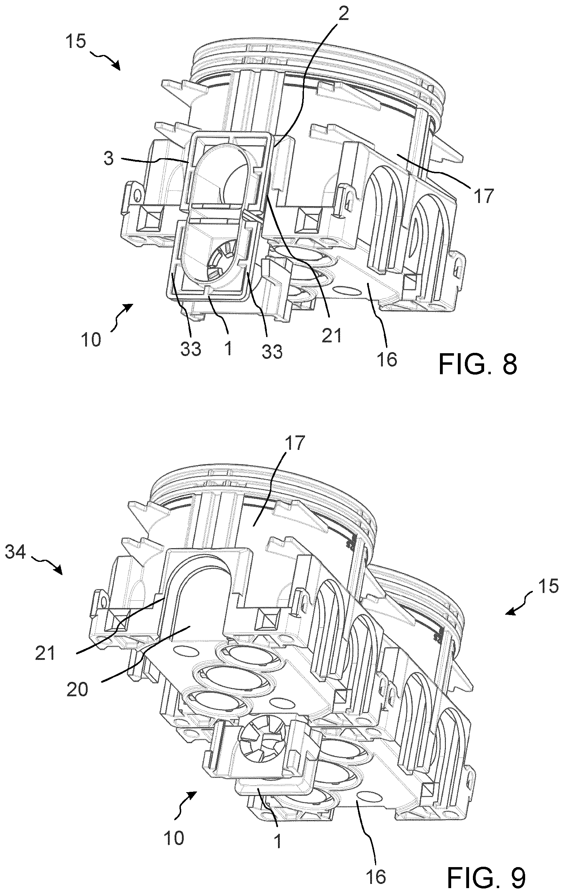

Figure 8 illustrates strain relief provided with a first installation tool 10. The embodiment of Figure 8 is very similar to the one explained in connection with Figure 6, for instance. Due to this the embodiment of Figure 8 is in the following explained mainly by pointing out the differences between these embodiments.

In Figure 8, the first installation tool 10 has been turned into an upside-down position as compared to Figure 6, before the first installation tool 10 has been attached to the first electrical installation box 15.

Consequently, in Figure 8 the first flange 1 is located lowermost, while the second flange 2 of the first installation tool 10 is received into the groove 21 provided to the wall 17 of the electrical installation box 15. In this position the installation tool 10 is firmly attached to the electrical installation box 15, as the first 1 and second 2 flange both have the same largest distance between the outermost edges 33, which well matches the size of the groove 21.

In the illustrated position the first installation tool 10 can be utilized for strain relief for a cable, as explained in connection with Figure 5, and also as a support where the part of the first installation tool 10 protruding past the bottom 16 of the first electrical installation box 15 is fitted against a lower plate, as explained in connection with Figure 6.

Figure 9 illustrates attachment of two electrical installation boxes to each other with an installation tool. The embodiment of Figure 9 is very similar to the previously explained embodiments. Due to this, the embodiment of Figure 9 is in the following mainly explained by pointing out the differences.

In Figure 9, the first installation tool 10 is attached to the first electrical installation box 15, as has been explained in connection with Figure 8. Consequently, the first flange 1 protrudes past the bottom 16 of the first electrical installation box 15, so that this protruding end of the first installation tool 10 can be utilized for supporting the first electrical installation box 15 against a bottom plate of a structure.

However, in Figure 9 a second electrical installation box 34 has been added to the installation system. This second electrical installation box 34 has a shape and dimensions corresponding to the shape and the dimensions of the first electrical installation box 15. In praxis the first and second electrical installation boxes may be identical.

Consequently, the second electrical installation box 34 is also provided with grooves 21 at cable lead-through sections 20 in the wall 17. One of these grooves 21 has in Figure 9 been utilized to attach the first and the second electrical installation box 15 and 34 to each other by means of the first installation tool 10.

This has been done by arranging the second flange 2 of the first installation tool 10 into a groove 21 on the first electrical installation box 25, while the third flange 3 of the first installation tool 10 has been arranged into a groove 21 on the second electrical installation box 34.

The result is that two identical electrical installation boxes can be firmly attached to each other by utilizing one single first installation tool 10. Consequently, identical parts as have been utilized in connection with the other embodiments, which simplifies the installation work as only installations tools of one single type and only electric installation boxes of one single type are needed for the various installation sites and tasks.

It is to be understood that the above description and the accompanying figures are only intended to illustrate the present invention. It will be obvious to a person skilled in the art that the invention can be varied and modified without departing from the scope of the invention.

## Claims

1. Installation system comprising a first installation tool (10), **characterized in that** in the first installation tool:
a front side (6) of the first end (7) is provided with a first flange (1) extending sideways outwards from a first (9) and a second (11) opposite side surface of the first end (7) for being received in a groove (21) provided on an outer side of a wall (17) of an electric installation box (15),
a back side (12) of the first end (7) is provided with a first (4) and a second (5) protrusion protruding from the first (9) and the second side (11) surfaces in a direction away from the first flange (1), the first (4) and the second protrusions (5) having a respective hook section (13) with inner surfaces (14) facing each other and having a mutual largest distance between the inner surfaces (14) of the hook sections (13) which corresponds to the largest distance between the outermost edges (33) of the first flange (1), for receiving and engaging a flange having the same dimensions as the first flange (1), and
the second end (8) of the first installation tool is provided with a second (2) and with a third (3) flange extending sideways outwards from the first (9) and the second (11) opposite side surface of the second end (8) at a distance from each other, the second (2) and third flange (3) have a largest distance between the outermost edges which corresponds to the largest distance between the outermost edges (33) of the first flange (1).

2. The installation system according to claim 1, wherein the first installation tool (10) is provided with a cable strain relief comprising:
a first through-hole (22) extending in the first end (7) between the opposite first (9) and second (11) side surfaces from the front side (6) of the first installation tool (10) to the back side (12) of the first installation tool (10), and
a second through-hole (23) extending in the second end (8) between the first (9) and second (11) opposite side surfaces from the front side (6) of the first installation tool (10) to the back side (12) of the first installation tool (10).

3. The installation system according to claim 2, wherein at least one of the the first (22) and second (23) through-hole comprises at least one flexible protrusion (24) extending inwards into the through-hole and towards a center axis (15) of the first through-hole (22).

4. The installation system according to claim 3, wherein the flexible protrusion (24) is provided to the first through-hole (22) and extends inwards and towards the center axis (25) of the first through-hole (22) from the back side (12) of the first end (7).

5. The installation system according to one of claims 1 to 4, wherein the first (4) and second (5) protrusion of the first installation tool (10) are each provided with a shaft (26) protruding towards the first flange (1).

6. The installation system according to one of claims 1 to 5, wherein the installation system includes a first electrical installation box (15) comprising:
a bottom (16) and at least one wall (17) which delimit a connection space (18) from the surroundings,
an access opening (19) providing access to the connection space (18) for carrying out electrical installations in the connection space,
a cable lead-through section (20) provided to the at least one wall (17), and
a groove (21) provided on an outer side of the wall (17) to partly surround the cable lead-through section (20), the groove (21) being dimensioned to receive and engage the first (1), the second (2) or the third (3) flange of the first installation tool (10) in a position, where the first installation tool (10) is arranged as a support protruding partly past the bottom (16) of the first electrical installation box (15).

7. The installation system according to claim 5, wherein
the installation system includes a first electrical installation box (15) comprising:
a bottom (16) and at least one wall (17) which delimit a connection space (18) from the surroundings,
an access opening (19) providing access to the connection space (18) for carrying out electrical installations in the connection space (18),
a cable lead-through section (20) provided to the at least one wall (17), and
a groove (21) provided on an outer side of the wall (17) to partly surround the cable lead-through section (20), the groove (21) being dimensioned to receive and engage the first flange (1) of the first installation tool (10) in a position, where the first installation tool (10) is arranged as a support protruding partly past the bottom (16) of the electrical installation box (15), and
the groove (21) is provided with a first and a second recess (27) for providing a snap attachment between the first installation tool (10) and the first electrical installation box (15) by receiving the shafts (26) of the first installation tool (10) into the respective first and second recesses (27) when the first flange (1) is received in the groove (21).

8. The installation system according to claim 6 or 7, wherein
the installation system comprises a second installation tool (32) having a shape and dimensions corresponding to the shape and dimensions of the first installation tool (10), and
the second installation tool (32) is configured to engage the second flange (2) of the first installation tool (10) with respective hook sections (13) of a first (4) and a second (5) protrusion protruding from first (9) and second (11) side surfaces of the second installation tool (32) when the first flange (1) of the first installation tool (10) is received by the groove (21) of the first electrical installation box (15), for arranging the second installation tool (32) as a support protruding away from the bottom (16) of the first electrical installation box (15).

9. The installation system according to one of claims 1 to 5, wherein
the installation system includes a first (15) and a second electrical installation box (34) each comprising:
a bottom (16) and at least one wall (17) which delimit a connection space (18) from the surroundings,
an access opening (19) providing access to the connection space (18) for carrying out electrical installations in the connection space,
a cable lead-through section (20) provided to the at least one wall (17), and
a groove (21) provided on an outer side of the wall (17) to partly surround the cable lead-through section (20), whereby
the groove (21) of the first electrical installation box (15) is dimensioned to receive and engage the second flange (2) of the first installation tool (10) and the groove (21) of the second electrical installation box (34) is dimensioned to receive an engage the third flange (3) of the first installation tool (10) for connecting the first (15) and the second electrical installation box (34) to each other via the second (2) and the third (3) flange of the first installation tool (10), which partly protrudes past the respective bottom (16) of the first (15) and second electrical installation box (34).

10. The installation system according to one of claims 6-9, wherein at least the first (15) electrical installation box (15) is provided with protruding sections (30, 31) extending outwards from the at least one wall (17) for contacting an inner surface of surface plate (28) of a structure, such as a wall, a floor or a roof section, when the installation box (15) is flush mounted into the structure.

11. The installation system according to claim 10, wherein protruding sections (30, 31) are arranged on at least two different distances from the access opening (19).

12. Installation tool (10), **characterized in that** in the installation tool:
a front side (6) of the first end (7) is provided with a first flange (1) extending sideways outwards from a first (9) and a second (11) opposite side surface of the first end (7),
a back side (12) of the first end (7) is provided with a first (4) and a second (5) protrusion protruding from the first (9) and the second side (11) surfaces in a direction away from the first flange (1), the first (4) and the second protrusions (5) having a respective hook section (13) with inner surfaces (14) facing each other and having a mutual largest distance between the inner surfaces (14) of the hook sections (13) which corresponds to the largest distance between the outermost edges (33) of the first flange (1), for receiving and engaging a flange having the same dimensions as the first flange (1), and
the second end (8) of the first installation tool is provided with a second (2) and with a third (3) flange extending sideways outwards from the first (9) and the second (11) opposite side surface of the second end (8) at a distance from each other, the second (2) and third flange (3) have a largest distance between the outermost edges which corresponds to the largest distance between the outermost edges (33) of the first flange (1).
